# EUROPÄISCHE PATENTSCHRIFT

(11) **EP 0 679 058 B1**
(45) Veröffentlichungstag und Bekanntmachung des Hinweises auf die Patenterteilung: **12.03.1997**
(21) Anmeldenummer: 94902529.0
(22) Anmeldetag: 28.12.1993
(51) Int. Cl.: A22B 7/00, B60P 3/05

(54) **FAHRBARE VIEH-SCHLACHTEINRICHTUNG**
MOVABLE SLAUGHTERHOUSE
ABATTOIR MOBILE

(30) Priorität: 29.12.1992 AT 2596/92; 14.12.1993 AT 2539/93
(43) Veröffentlichungstag der Anmeldung: 02.11.1995
(73) Patentinhaber: SCHWAIGER, Herbert, A-2651 Reichenau (AT)
(72) Erfinder: SCHWAIGER, Herbert, A-2651 Reichenau (AT)
(74) Vertreter: Weinzinger, Arnulf, Dipl.-Ing.
(86) Internationale Anmeldenummer: AT9300200
(87) Internationale Veröffentlichungsnummer: WO9414326

(56) Entgegenhaltungen:
- DE-A- 3 711 832
- DE-A- 4 008 851
- SE-A- 448 144

## Beschreibung

Die Erfindung bezieht sich auf eine fahrbare Vieh-Schlachteinrichtung, insbesondere zur Schlachtung und Aufarbeitung von Rindern und Schweinen, welche Schlachteinrichtung mit einem Schlacht- und Arbeitsraum mit Schlacht- und Aufarbeitungshilfsmitteln, insbesondere einer Aufzieheinrichtung, und mit einer Kühleinrichtung versehen ist.

Die Schlachtung von Vieh wird gegenwärtig weitaus überwiegend in großangelegten Schlachthöfen durchgeführt, zu denen das zu schlachtende Vieh über größere Strecken antransportiert wird. Solche Viehtransporte verursachen einen verhältnismäßig großen Aufwand und bedeuten ebenso wie das an die Überlandtransporte anschließende Entladen und Treiben der Tiere am Schlachthof eine große körperliche und seelische Belastung für die Tiere, welche auch die Fleischqualität beträchtlich herabsetzen kann und damit den wirtschaftlichen Erfolg erheblich schmälert; dies gilt insbesondere für hochgezüchtete Tiere, die gegenüber Streßsituationen ebenso wie auf Weiden gehaltene Tiere erfahrungsgemäß sehr anfällig sind.

Es sind auch bekannte fahrbare Vieh-Schlachteinrichtungen für die Schlachtung und Aufarbeitung großer Mengen an Schlachtvieh konzipiert und bestehen aus mehreren größeren Fahrzeugen oder großen Containern, welche am jeweiligen Aufstellungsort zu einer Schlachteinrichtung zusammenzufügen sind. Es sind demgemäß solche Einrichtungen, wie sie z.B. in der DE-OS 3 639 317, in der SU-A 501 733 oder in der SE-B-448 144 beschrieben sind, praktisch nur bei großem Anfall von Schlachtvieh einsetzbar, wie dies bei sehr großen Tierzuchtbetrieben der Fall ist; bei verteiltem Anfall von Schlachtvieh muß dieses, wenn die Arbeitskapazität solcher Einrichtungen ausgenützt werden soll, wieder über größere Entfernungen zum Aufstellungsort einer solchen Einrichtung herantransportiert werden, woraus neuerlich Nachteile oberwähnter Art entstehen können. Außerdem sind verschiedene bekannte Einrichtungen eingangs genannter Art, wie sie z.B. in der SE-B-448 144 und in der HU-A-52 333 beschrieben sind, trotz ihrer Größe nur für das Schlachten und Aufarbeiten kleinerer Tiere, nicht aber zum Schlachten und Aufarbeiten von Rindern, geeignet.

Es ist ein Ziel der vorliegenden Erfindung, eine Einrichtung eingangs genannter Art zu schaffen, welche auf wirtschaftliche
und praktikable Weise ein Schlachten und Aufarbeiten des meist in kleinen Bauernhöfen und auch auf Weiden bzw. Almen gehaltenen Viehes ermöglicht, ohne daß dieses auf längeren Transportwegen zu einer Schlachteinrichtung gebracht werden muß. Ein besonderes Erfordernis ist dabei auch, daß die zu schaffende Einrichtung ein praktikables Arbeiten bei der Schlachtung und Aufarbeitung von Rindern ermöglichen muß, und es ist weiter ein wesentliches Erfordernis, daß die Einrichtung auch für das Befahren einfacher Fahrwege, wie sie üblicherweise zu Bauernhöfen in Streulage, zu Weiden und Almen führen, geeignet sein muß, d.h. daß unter anderem möglichst geringe Abmessungen im Fahrzustand vorliegen sollen. Die Einrichtung soll auch mit geringem Arbeitsaufwand vom Fahrzustand in den Arbeitszustand und zurück gewandelt werden können, um auch jeweils einige wenige Tiere, die an einem Ort anfallen, dort wirtschaftlich schlachten und aufarbeiten zu können.

Die erfindungsgemäße Einrichtung eingangs erwähnter Art ist dadurch gekennzeichnet, daß die Schlachteinrichtung in Form eines einzigen, vorzugsweise mit Eigenantrieb ausgestatteten Fahrzeuges mit einem eine Kühlzelle enthaltenden Kastenaufbau ausgebildet ist, an welchem an seinem einen Ende zur Bildung eines an den Kastenaufbau anschließenden, eine größere Innenhöhe als der Kastenaufbau aufweisenden Schlacht- und Arbeitsraumes, ein am Fahrzeug bewegbar angebrachtes Dachelement, welches im Arbeitszustand der Vieh-Schlachteinrichtung in einer vom der Kühlzelle weg auskragenden Lage fixierbar ist, in der seine Innenseite auf einem ober dem Deckenniveau der Kühlzelle verlaufenden Niveau liegt, und eine unten am Fahrzeug ausklappbar angelenkte Bodenwand, welche in Art einer Wanne mit einer mittigen Basiszone und von dieser aufragenden Randwänden ausgebildet ist, wobei diese Bodenwand in der für den Arbeitszustand ausgeklappten Stellung mit ihrer mittigen Basiszone auf einem unter dem Bodenniveau des Kastenaufbaues verlaufenden Niveau liegt, angeordnet sind, und weiter bewegliche Seitenwandelemente angeordnet sind, welche zum seitlichen Schließen des Schlacht- und Arbeitsraumes zwischen dem Dachelement und der Bodenwand placierbar sind.

Durch eine solche Ausbildung der Einrichtung eingangs erwähnter Art kann der vorstehend angeführten Zielsetzung gut entspro chen werden. Es können die Tiere unter Zuhilfenahme der erfindungsgemäßen Einrichtung unmittelbar im Bereich ihrer Haltung, d.h. im Weidegebiet bei Weidetieren oder im Bereich des Stalles bzw. Gehöftes, in dem bzw. auf dem diese Tiere gehalten werden, geschlachtet, aufgearbeitet und einer Kühlung zugeführt werden. Es kommt die Notwendigkeit, die Schlachttiere über größere Strecken transportieren zu müssen, mit all den damit einhergehenden Nachteilen, insbesondere aber die damit einhergehende Minderung der Fleischqualität in Wegfall, und es tritt als weiterer Vorteil hinzu, daß die beträchtliche Abwasserbelastung, welche durch den Betrieb großer Schlachthöfe entsteht und welche hohe Kosten zu ihrer Bewältigung verursacht, in Wegfall kommt, weil der beim Schlachten anfallende Verdauungstraktinhalt entsprechend dem Schlachtviehaufkommen örtlich verteilt nach einfacher Aufbereitung als wertvoller Dünger verwendet werden kann. Es kann mit einer solchen fahrbaren Vieh-Schlachteinrichtung der Schlachtvorgang praktisch überall durchgeführt werden, ohne daß dafür zusätzliche Einrichtungen oder Vorkehrungen benötigt werden. Eine solche Ausbildung der Einrichtung ermöglicht es, die Abmessungen des Fahrzeuges, welche bei der Fahrt von einem zu einem anderen Einsatzort vorliegen, verhältnismäßig gering zu halten und am jeweiligen Einsatzort durch Ausziehen und Ausklappen der den Schlacht- und Arbeitsraum bildenden Wände einen derartigen Raum von verhältnismäßig reichlicher Größe zu schaffen. Die spezielle Ausbildung und Anordnung bzw. Anbringung der zur Bildung des Schlacht- und Arbeitsraumes vorgesehenen Bodenwand und des hiefür vorgesehenen Dachelementes ermöglicht eine verhältnismäßig große Höhe des Schlacht- und Arbeitsraumes auch bei geringer Höhe des Fahrzeuges, welche zum Erreichen abseits großer Verkehrswege liegender Arbeitsplätze vorteilhaft ist; eine solche größere Höhe des Schlacht- und Arbeitsraumes ermöglicht ein praktikables Arbeiten bei der Schlachtung und Aufarbeitung von Rindern, da ja die Tierkörper für das Aufarbeiten langgestreckt aufgezogen werden müssen. Durch die Ausbildung der Bodenwand in Art einer Wanne wird der Schlacht- und Arbeitsraum gegenüber nachteiligen Wettereinflüssen geschützt und gleichzeitig eine Belastung bzw. Verschmutzung der Umgebung beim Schlachtbetrieb weitestgehend ausgeschlossen und auch eine einfache Handhabung beim Auf- und Abbau des Schlacht- und Arbeitsraumes erzielt. Der gegenüber einem gewöhnlichen Fahrzeug, wie es üblicherweise für Schlachtviehtransporte benützt wird, schwerere Aufbau eines Fahrzeuges mit Schlacht-, Aufarbeitungs- und Kühleinrichtung wird durch die einfachere Handhabung beim Transport des Fleisches und durch das gegenüber dem Lebendgewicht geringere Fleischgewicht sowie durch den Wegfall der oft schwierigen Arbeiten beim Lebendviehtransport wettgemacht. Das notwendigerweise für den Schlachtbetrieb erforderliche Wasser kann von jedem Wasseranschluß, die ja verbreitet zur Verfügung stehen, bezogen werden, und es ist in der Regel möglich, für die Energieversorgung der zum Schlachten und Aufarbeiten verwendeten Hilfsmittel einen Anschluß an ein öffentliches Stromversorgungsnetz zu benützen. Im Bedarfsfall kann man aber auch einen autonomen Betrieb mit einem entsprechenden Stromversorgungsaggregat vorsehen und für Schlachtungen kleineren Umfanges kann auch mit in einem entsprechenden Vorratsbehälter mitgeführtem Wasser das Auslangen gefunden werden. Hinsichtlich der Bodenwand ergibt sich eine baulich günstige Ausführungsform, wenn man vorsieht, daß die Bodenwand an dem von der Basiszone entfernten Rand einer Randwand am Fahrzeug angelenkt ist und so im ausgeklappten Zustand der Bodenwand deren Basiszone um die Höhe der betreffenden Randwand unter der Anlenkstelle der Bodenwand liegt. Hinsichtlich des Dachelementes ergibt sich eine baulich günstige Ausführungsform, wenn man vorsieht, daß das Dachelement oben am Fahrzeug ausklappbar angelenkt ist, wobei, im ausgeklappten Zustand des Dachelementes betrachtet, die am Dachelement befindliche Anlenkstelle im Abstand von der Dachfläche unterhalb dieser liegt und so die Innenseite des Dachelementes auf höherem Niveau als die Anlenkstelle liegt. Gemäß einer vorteilhaften Variante ist vorgesehen, daß die Anlenkstelle der Bodenwand und/oder die Anbringstelle des Dachelementes auf einer ein Auf- und Ab-Bewegen dieser Anlenkstelle bzw. dieser Anbringstelle ermöglichenden Hubeinrichtung angeordnet sind.

Eine bevorzugte Ausführungsform der erfindungsgemäßen Einrichtung ist dadurch gekennzeichnet, daß das Dachelement als Platte oder Wanne ausgebildet ist. Eine Variante hierzu ist dadurch gekennzeichnet, daß das Dachelement als Dachgestell mit rollbarer oder faltbarer Dachhaut ausgebildet ist. Im Hinblick auf die bei
Fahrzeugen gegebene Höhenbeschränkung kann man vorteilhaft zum Erzielen einer möglichst großen Länge des Schlacht- und Arbeitsraumes vorsehen, daß die Bodenwand mehrteilig, insbesondere zweiteilig, ausgebildet ist, wobei einer dieser Teile unmittelbar am Fahrzeug ausklappbar angebracht ist und der oder die andere(n) Teil(e) am ersterwähnten Teil ausziehbar angebracht ist bzw. sind. Eine gleichfalls brauchbare Alternative zur ausziehbaren Ausbildung wäre der Einsatz einer aus mehreren mit Scharnieren verbundenen Teilen bestehenden Bodenwand.

Es ist auch vorteilhaft vorzusehen, daß das Dachelement mehrteilig, insbesondere zweiteilig, ausgebildet ist und hiebei einer der Teile am Fahrzeug ausklappbar angebracht ist und der oder die andere(n) Teil(e) an diesem Teil ausziehbar angebracht ist bzw. sind. So kann eine Dachlänge erhalten werden, welche größer ist als die beschränkte Höhe des Fahrzeuges.

Das Unterteilen der Bodenwand und/oder der Dachwand kann sowohl in Längsrichtung als auch in Querrichtung vorgesehen sein.

Zur Bildung eines für den Schlacht- und Zerlegungsvorgang erforderlichen Hebezeuges sieht man vorteilhaft eine am Fahrzeug ausziehbar oder ausklappbar gelagerte Kranschiene, welche über den Schlacht- und Arbeitsraum verläuft, vor. Vorteilhaft ist einesolche Kranschiene Teil eines elektrisch oder hydraulisch antreibbaren Aufzugskranes. Man kann aber auch mit einem einfachen, an einer Kranschiene, vorzugsweise fahrbar, angeordneten Flaschenzug das Auslangen finden.

Um die Aufnahmekapazität der Kühlzelle möglichst gut für die Unterbringung von Tierhälften bzw. großen Tierteilen, die bei der Aufarbeitung der Schlachttiere erhalten werden, nützen zu können, sieht man vorteilhaft vor, daß das Fahrzeug mit von außen zuganglichen gekühlten Behältern für die Aufnahme von Innereien, Därmen, Häuten und Schlachtabfällen, mit einem Blutbehälter, mit einem Abwasserbehälter und vorzugsweise auch mit einem Warmhaltebehälter ausgestattet ist.

Hinsichtlich der Ausbildung der Seitenwände steht das Erzielen eines geringen Gewichtes, einer leichten Handhabbarkeit beim Anordnen und beim Verbinden mit der Bodenwand und/oder dem Dachelement sowie beim Abbauen und auch eine Robustheit gegenüber den Beanspruchungen beim Fahrbetrieb des Fahrzeuges und beim Arbeiten
im Arbeitsraum im Vordergrund. Die Möglichkeit einer leichten Reinigung ist selbstverständlich auch sicherzustellen. Eine vorteilhafte Ausführungsform ist dadurch gekennzeichnet, daß die Seitenwände in Form rollbarer oder faltbarer Platten oder Planen ausgebildet sind, wobei diese entweder am Dachelement nach unten ausziehbar angebracht und ausgezogen an der Bodenwand fixierbar sind, oder an der Bodenwand hochziehbar angebracht und am Dachelement fixierbar sind, oder am Kastenaufbau nach hinten ausziehbar angebracht und ausgezogen an der Bodenwand und/oder am Dachelement fixierbar sind. Die Seitenwände können dabei auch aus Lamellen aufgebaut sein. Eine sehr einfache Ausführungsform ergibt sich, wenn die Dachhaut und die Seitenwände integriert aus rollbaren oder faltbaren Platten oder Panelen ausgebildet sind. Eine andere vorteilhaft Ausführungsform, die eine sehr gute Stabilität der Seitenwände erzielen läßt, ist dadurch gekennzeichnet, daß die Seitenwände aus Panelen oder Platten gebildet sind, welche klappbar an der Bodenwand oder am Dachelement oder am Kastenaufbau angebracht sind. Eine weitere vorteilhafte Ausführungsform ist dadurch gekennzeichnet, daß an je einer Seite des Fahrzeuges verschiebbar angeordnete Seitenwände in Fahrzeuglängsrichtung ausziehbar angeordnet sind.

Für ergänzende Arbeiten, wie z.B. Gedärmewaschen, sieht man vorteilhaft einen an die Einrichtung andockbaren Arbeitsraum vor.

Die Erfindung wird nun unter Bezugnahme auf in der Zeichnung schematisch dargestellte Beispiele erfindungsgemäßer Einrichtungen weiter erläutert.

In der Zeichnung zeigen:
Fig.1 eine Ausführungsform einer erfindungsgemäß ausgebildeten Vorrichtung in teilweise aufgeschnittener Seitenansicht,
Fig.2 eine weitere Ausführungsform einer erfindungsgemäß ausgebildeten Vorrichtung,
Fig.3 eine Variante hinsichtlich der Anbringung von Bodenwand und Dachelement,
Fig.4 eine andere Ausführungsform, bei der die Seitenwände im Fahrzustand der Einrichtung an der Bodenwand angeordnet sind,
Fig.5 eine Ausführungsform, bei der die Seitenwände im Fahrzustand der Einrichtung zusammengefaltet am Dachelement angeordnet sind,
Fig.6 eine Ausführungsform mit am Kastenaufbau angebrachten Seitenwänden,
Fig.7 eine Ausführungsform mit klappbar am Dachelement angebrachten Seitenwänden, und
Fig.8 eine Ausführungsform, bei der eine rollbare oder faltbare Dachhaut mit den Seitenwänden integriert ist.

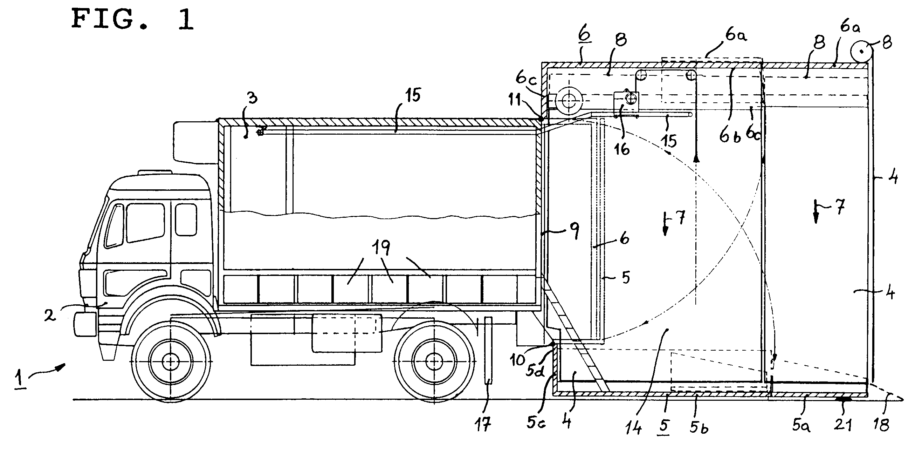

Das in Fig.1 dargestellte Beispiel einer erfindungsgemäßen Einrichtung 1 ist in Form eines mit Eigenantrieb ausgestatteten Fahrzeuges, nämlich eines Lastkraftwagens 2, auf dem ein mit einer Kühlzelle 3 versehener Kastenaufbau vorgesehen ist, ausgebildet. Zur Bildung eines Schlacht- und Arbeitsraumes 14 sind an diesem Fahrzeug Seitenwände 4, eine Bodenwand 5 und ein Dachelement 6 in Form einer Dachwand vorgesehen. Diese Wände sind in vollen Linien in jener Stellung dargestellt, welche sie einnehmen, wenn sich das Fahrzeug in Arbeitsstellung befindet.

Die Seitenwände 4 sind in Form rollbarer Platten ausgebildet und vom am Dachelement 6 in Richtung der Pfeile 7 nach unten ausziehbar angeordnet und an der Bodenwand 5 fixierbar. Auch an der Rückseite des Arbeitsraumes kann man gewünschtenfalls eine solche Seitenwand 4a vorsehen. Solche rollbaren Platten können z.B. in Form dicker flexibler Kunststoffolien, in Form von Metallblechen oder auch in Form steifer Gewebe ausgebildet sein. Auch jalousieartig mit Bändern aneinandergefügte Lamellen kommen in Frage. Die rollbaren Platten sind auf Rollen 8 aufrollbar, welche am Dachelement 6 drehbar gelagert angeordnet sind. Die Bodenwand 5 ist unten an der Rückseite 9 der Kühlzelle 3 mit einem unteren Drehgelenk 10 ausklappbar gelagert und in korrespondierender Weise ist das als Dachwand ausgebildete Dachelement 6 oben an der Rückseite 9 der Kühlzelle 3 mit einem oberen Drehgelenk 11 ausklappbar gelagert. Durch Ausklappen der Bodenwand 5 sowie der Dachwand 6, für welchen Ausklappvorgang hydraulische Arbeitszylinder vorgesehen sind, gelangen diese Wände in die in Fig.1 mit vollen Linien dargestellte Stellung, in der sie zusammen mit den Seitenwänden 4 einen Schlacht- und Arbeitsraum 14 begrenzen bzw. umgeben. Die Bodenwand 5 ist in Art einer Wanne mit einer mittigen Basiszone 5b und von dieser aufragenden Randwänden 5c ausgebildet. Das Drehgelenk 10 ist an dem von der Basiszone 5b entfernten Rand 5d jener Randwand 5c angeordnet, welche der Kühlzelle 3 zugewandt ist, und es ergibt sich so durch den Abstand zwischen dem Drehgelenk 10 und der Basiszone 5b, daß die Basiszone 5b im ausgeklappten Zustand der Bodenwand 5 unter der Anlenkstelle der Bodenwand, d.h. unter dem Niveau des Drehgelenkes 10 liegt. Das Dachelement 6 liegt mit seiner Innenseite 6b auf einem über dem Drehgelenk 11 verlaufenden Niveau, so daß die Höhe des Arbeitsraumes 14 durch das gegenüber dem Fahrzeugkastenaufbau tiefliegende Niveau der Basiszone 5b der Bodenwand 5 und durch das hochliegende Niveau der Innenseite des Dachelementes 6 wesentlich größer sein kann als die Höhe des Fahrzeugkastenaufbaues. Auch das als Dachwand ausgebildete Dachelement ist, um bei baulich einfacher Ausbildung bei geringem Gewicht eine gute Stabilität zu erzielen, in Art einer Wanne mit Randwänden 6c versehen, und es ist das Drehgelenk 11 an einer solchen Randwand 6c angeordnet. Eine einteilige Ausbildung von Bodenwand 5 und Dachelement 6 ist baulich einfach und ergibt eine oft ausreichende Länge des Arbeitsraumes 14. Will man aber trotz der durch praktische Erwägungen und durch Vorschriften begrenzten Höhe des im fahrbereiten Zustand befindlichen Fahrzeuges, welche die Länge der an der Fahrzeugrückseite ausklappbar gelagerten Wände beschränkt, eine größere Länge und Fläche des Schlacht- und Arbeitsraumes 14 erzielen, kann man, wie dargestellt, sowohl die Bodenwand 5 als auch die Dachwand 6 mehrteilig ausbilden, nämlich je mit einem weiteren Wandteil 5a bzw. 6a versehen, welche an den klappbar am Fahrzeug angebrachten Wandteilen 5 und 6 ausziehbar angebracht sind. Die eingeschobene Stellung der Wandteile 5a und 6a ist strichliert angedeutet. Insgesamt bildet die Bodenwand 5 mit dem Wandteil 5a eine in Art einer hydraulisch antreibbaren Lagebordwand ausgebildete Wanne. An der Dachwand 6 oder unter dieser ist eine ausfahrbar und/oder ausklappbar gelagerte Kranschiene 15 vorgesehen, an der eine Seilwinde 16 zum Aufziehen der Schlachttiere fahrbar angeordnet ist. Stützfüße 17 und 21 sind vorgesehen, um während des Schlachtbetriebes die Belastung des Fahrzeuges durch den auskragend angeordneten Schlacht- und Arbeitsraum 14 zu vermindern. Eine Rampe 18 erleichtert das Begehen und das Einbringen der Tiere in den Schlacht- und Arbeitsraum.

An der Unterseite der Kühlzelle 3 ist eine Anzahl von gekühlten Behältern 19 vorgesehen, welche von außen zugänglich sind und vorteilhaft in Form von Laden ausgebildet sein können, welche Behälter zur Aufnahme von Innereien, Därmen, Häuten und Schlachtabfällen eingesetzt werden können; ein solcher oder ähnlicher Behälter kann auch zur Aufnahme von Blut vorgesehen werden. Für warmzuhaltendes Material ist vorzugsweise auch ein Warmhaltebehälter, der gewünschtenfalls gleichfalls unter der Kühlzelle 3 angeordnet werden kann, vorgesehen. Es ist weiter vorteilhaft, das Fahrzeug mit einem Abwasserbehälter auszustatten, der z.B. in der Mitte zwischen zwei Reihen von Behältern 19, die je von den Seiten des Fahrzeuges her zugänglich sind, angeordnet werden kann. Bei Vorhandensein eines solchen Abwasserbehälters kann ein Schlachtbe trieb auch dann erfolgen, wenn am jeweiligen Arbeitsort kein geeigneter Kanalanschluß zur Verfügung steht und ein Ablassen des Schlachtabwassers in die Umgebung vermieden werden muß.

Für den beim Schweineschlachten meist vorzunehmenden Brühvorgang wird vorteilhaft eine Brühwanne im Bereich des durch die Bodenwand 5 bzw. 5a gebildeten Bodens des Schlacht- und Arbeitsraumes 14 vorgesehen. Zur Speisung einer solchen Brühwanne sieht man vorteilhaft einen gasbeheizten Heißwasserbereiter vor.

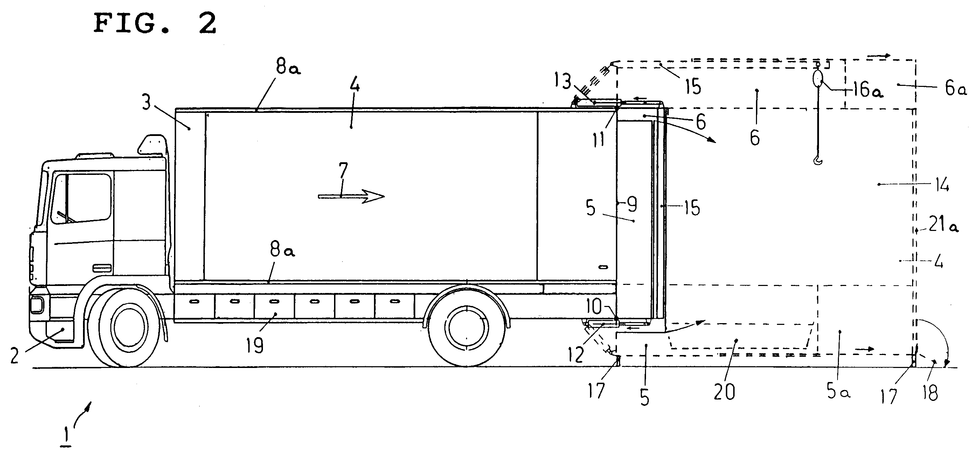

Das in Fig.2 dargestellte Ausführungsbeispiel einer erfindungsgemäßen Vorrichtung 1 ist, analog wie das in Fig.1 dargestellte Beispiel, in Form eines mit einem Eigenantrieb ausgestatteten Fahrzeuges, nämlich eines Lastkraftwagens 2, auf dem eine Kühlzelle 3 vorgesehen ist, ausgebildet. Zur Bildung eines Schlacht- und Arbeitsraumes sind an diesem Fahrzeug Seitenwände 4, eine Bodenwand 5 und eine Dachwand 6 vorgesehen. Diese Wände sind in vollen Linien in jener Stellung dargestellt, welche sie einnehmen, wenn das Fahrzeug zur Ortsveränderung vorbereitet ist.

Die Seitenwände 4 sind an den Außenseiten der Kühlzelle 3 in Richtung des Pfeiles 7, d.h. in Fahrzeuglängsrichtung, ausziehbar angeordnet und hierzu bei dem in Fig.2 dargestellten Beispiel auf Laufschienen 8a, die ihrerseits am Fahrzeug bzw. an der Kühlzelle 3 angebracht sind, verschiebbar gelagert. Die Bodenwand 5 ist unten an der Rückseite 9 der Kühlzelle 3 mit einem unteren Drehgelenk 10 ausklappbar gelagert, und in korrespondierender Weise ist die Dachwand 6 oben an der Rückseite 9 der Kühlzelle 3 mit einem oberen Drehgelenk 11 ausklappbar gelagert. Durch Ausziehen der Seitenwände 4 in Richtung des Pfeiles 7 und durch Ausklappen der Bodenwand 5 sowie der Dachwand 6, für welchen Ausklappvorgang hydraulische Arbeitszylinder 12, 13 vorgesehen sind, gelangen diese Wände in die in der Zeichnungsfigur strichliert dargestellte Stellung, in der sie einen Schlacht- und Arbeitsraum 14 begrenzen bzw. umgeben. Durch die Lage der Drehgelenke 10 und 11 in bezug auf den Kastenaufbau des Fahrzeuges und in bezug auf die Innenseite der Bodenwand und der Dachwand wird auch in diesem Fall trotz begrenzter Höhe des Aufbaues des Fahrzeuges eine auch für Großvieh ausreichende Höhe des Arbeitsraumes erzielt. Um trotz der durch Vorschriften begrenzten Höhe des Fahrzeuges, welche die Länge der an der Fahrzeugrückseite ausklappbar gelagerten Wände beschränkt, eine größere Länge und Fläche des Schlacht- und Arbeitsraumes 14 zu erzielen, sind sowohl die Bodenwand 5 als auch die Dachwand 6 je mit einem weiteren Wandteil 5a bzw. 6a versehen, welche an den klappbar am Fahrzeug angebrachten Wandteilen 5 und 6 ausziehbar angebracht sind. Insgesamt bildet die Bodenwand 5 mit dem Wandteil 5a eine in Art einer hydraulisch antreibbaren Ladebordwand ausgebildete Wanne. An der Dachwand 6 oder unter dieser ist eine ausklappbar gelagerte Kranschiene 15 vorgesehen, an der ein Flaschenzug 16a zum Aufziehen der Schlachttiere fahrbar angeordnet ist. Stützfüße 17 und Streben 21a sind vorgesehen, um während des Schlachtbetriebes die Belastung des Fahrzeuges durch den auskragend angeordneten Schlacht- und Arbeitsraum 14 zu vermindern. Eine Rampe 18 erleichtert das Begehen und das Einbringen der Tiere in den Schlacht- und Arbeitsraum.

An der Unterseite der Kühlzelle 3 ist wieder eine Anzahl von gekühlten Behältern 19 vorgesehen, welche von außen zugänglich sind und vorteilhaft in Form von Laden ausgebildet sein können, welche Behälter zur Aufnahme von Innereien, Därmen, Häuten und Schlachtabfällen eingesetzt werden können; ein solcher oder ähnlicher Behälter kann auch zur Aufnahme von Blut vorgesehen werden. Für warmzuhaltendes Material ist vorzugsweise auch ein Warmhaltebehälter, der gewünschtenfalls gleichfalls unter der Kühlzelle 3 angeordnet werden kann, vorgesehen. Es ist weiter vorteilhaft, das Fahrzeug mit einem Abwasserbehälter auszustatten, der z.B. in der Mitte zwischen zwei Reihen von Behältern 19, die je von den Seiten des Fahrzeuges her zugänglich sind, angeordnet werden kann. Bei Vorhandensein eines solchen Abwasserbehälters kann ein Schlachtbetrieb auch dann erfolgen, wenn am jeweiligen Arbeitsort kein geeigneter Kanalanschluß zur Verfügung steht und ein Ablassen des Schlachtabwassers in die Umgebung vermieden werden muß.

Für den beim Schweineschlachten meist vorzunehmenden Brühvorgang wird vorteilhaft eine Brühwanne 20 im Bereich des durch die Bodenwand 5 bzw. 5a gebildeten Bodens des Schlacht- und Arbeitsraumes 14 vorgesehen. Zur Speisung einer solchen Brühwand 20 sieht man vorteilhaft einen gasbeheizten Heißwasserbereiter vor.

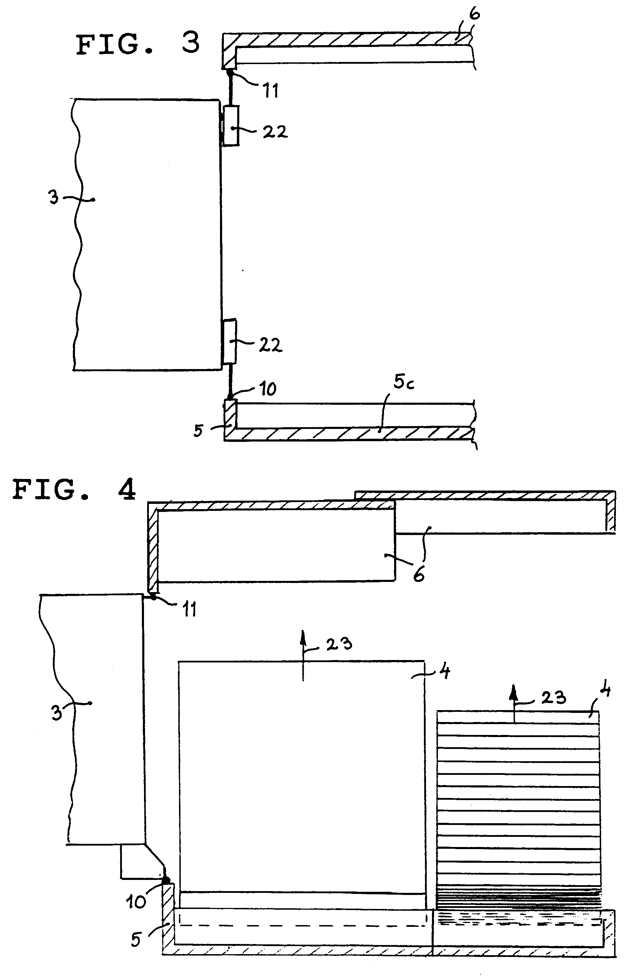

Bei der in Fig.3 dargestellten Ausführungsform sind die Drehgelenke 10 und 11, mit denen die Bodenwand 5 und das Dachelement 6 am Fahrzeug angebracht sind, an Hubeinrichtungen 22, die ihrerseits am Fahrzeug angebaut sind, angeordnet. Durch diese Hubeinrichtungen kann das Drehgelenk 10 abgesenkt und das Drehgelenk 11 angehoben werden. Dies kann anstelle der geometrischen Versetzung des Drehgelenkes 10 in bezug auf die Mittenzone 5c der Bodenwand 5 oder ergänzend zu dieser Versetzung zum Absenken der Bodenwand 5 beim Aufklappen derselben dienen. Korrespondierendes gilt hinsichtlich des Anhebens des Drehgelenkes 11 und des Dachelementes 6.

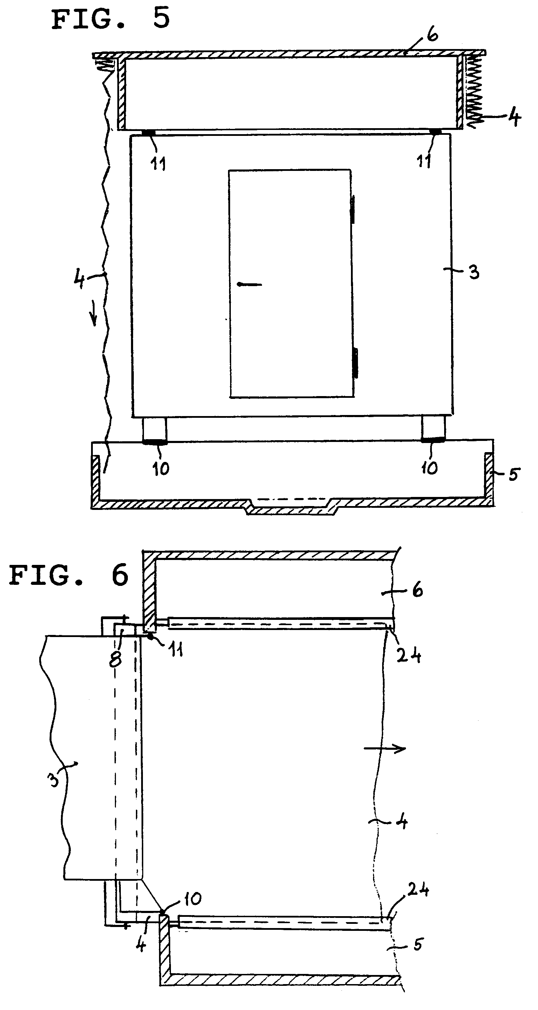

Bei der Ausführungsform nach Fig.4 sind rollbare oder faltbare Seitenwände 4 an der Bodenwand 5 angeordnet und im Sinne des Pfeiles 23 hochziehbar, um am Dachelement 6 fixiert zu werden.

Fig.5 zeigt eine Ausführungsform mit faltbar ausgebildeten Seitenwänden 4, welche am Dachelement 6 angebracht sind und von diesem heruntergelassen und an der Bodenwand fixiert werden können. Es ist dabei auf der linken Seite eine heruntergelassene Seitenwand 4 und auf der rechten Seite eine hochgezogene Seitenwand 4 dargestellt.

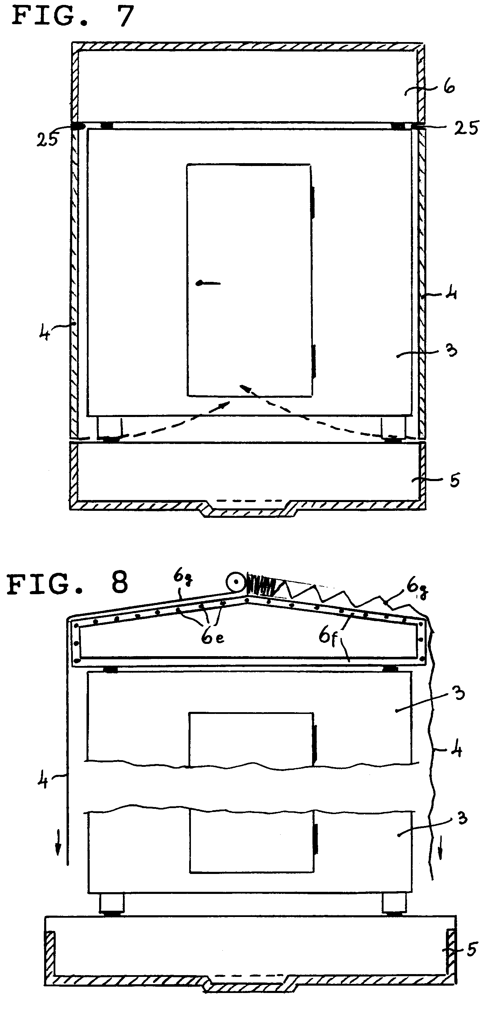

Fig.6 zeigt eine Ausführungsform mit rollbar ausgebildeten Seitenwänden 4, welche an dem die Kühlzelle 3 enthaltenden Kastenaufbau des Fahrzeuges angebracht sind und nach hinten ausgezogen werden können, um den Arbeitsraum seitlich abzuschließen. Es sind dabei mindestens am Dachelement 6 und gegebenenfalls auch an der Bodenwand 5 Führungsschienen 24 vorgesehen, in denen die Seitenwände 4 beim Ausziehen geführt werden. Man kann bei einer solchen Ausführungsform anstelle rollbarer Seitenwände auch faltbare Seitenwände vorsehen.

Fig.7 zeigt eine Ausführungsform, bei der die Seitenwände 4 des Arbeitsraumes in Form von Panelen ausgebildet sind, welche an Scharnieren 25 klappbar am Dachelement 6 angebracht sind. Bei solchen in Form von klappbar angeordneten Panelen ausgebildeten Seitenwänden kann man, anstelle einer Anbringung am Dachelement, auch eine Anbringung an der Bodenwand oder am Kastenaufbau des Fahrzeuges vorsehen.

Bei der in Fig.8 dargestellten Ausführungsform ist das Dachelement aus einem Dachgestell 6d aus Längsstäben 6e und Querstäben 6f und einer darauf angebrachten rollbaren oder faltbaren Dachhaut 6g gebildet. In Fig.8 ist dabei links eine rollbare und rechts eine faltbare Ausführung dargestellt. Es ist die Dachhaut im dargestellten Fall mit den Seitenwänden 4 integriert ausgebildet. Man kann aber die Dachhaut und die Seitenwände auch getrennt vorsehen.

## Patentansprüche

1. Fahrbare Vieh-Schlachteinrichtung, insbesondere zur Schlachtung und Aufarbeitung von Rindern und Schweinen, welche Schlachteinrichtung mit einem Schlacht- und Arbeitsraum mit Schlacht- und Aufarbeitungshilfsmitteln, insbesondere einer Aufzieheinrichtung, und mit einer Kühleinrichtung versehen ist, dadurch gekennzeichnet, daß die Schlachteinrichtung (1) in Form eines einzigen, vorzugsweise mit Eigenantrieb ausgestatteten Fahrzeuges (2) mit einem eine Kühlzelle (3) enthaltenden Kastenaufbau ausgebildet ist, an welchem an seinem einen Ende zur Bildung eines an den Kastenaufbau anschließenden, eine größere Innenhöhe als der Kastenaufbau aufweisenden Schlacht- und Arbeitsraumes (14), ein am Fahrzeug (2) bewegbar angebrachtes Dachelement (6), welches im Arbeitszustand der Vieh-Schlachteinrichtung in einer von der Kühlzelle (3) weg auskragenden Lage fixierbar ist, in der seine Innenseite auf einem ober dem Deckenniveau der Kühlzelle (3) verlaufenden Niveau liegt, und eine unten am Fahrzeug ausklappbar angelenkte Bodenwand (5), welche in Art einer Wanne mit einer mittigen Basiszone (5b) und von dieser aufragenden Randwänden (5c) ausgebildet ist, wobei diese Bodenwand (5) in der für den Arbeitszustand ausgeklappten Stellung mit ihrer mittigen Basiszone (5b) auf einem unter dem Bodenniveau des Kastenaufbaues verlaufenden Niveau liegt, angeordnet sind, und weiter bewegliche Seitenwandelemente (4) angeordnet sind, welche zum seitlichen Schließen des Schlacht- und Arbeitsraumes (14) zwischen dem Dachelement (6) und der Bodenwand (5) placierbar sind.

2. Fahrbare Vieh-Schlachteinrichtung nach Anspruch 1, dadurch gekennzeichnet, daß die Bodenwand (5) an dem von der Basiszone (5b) entfernten Rand (5d) einer Randwand am Fahrzeug (2) angelenkt ist und so im ausgeklappten Zustand der Bodenwand (5) deren Basiszone (5b) um die Höhe der betreffenden Randwand (5c) unter der Anlenkstelle (10) der Bodenwand liegt.

3. Fahrbare Vieh-Schlachteinrichtung nach Anspruch 1 oder 2, dadurch gekennzeichnet, daß das Dachelement (6) oben am Fahrzeug ausklappbar angelenkt ist, wobei, im ausgeklappten Zustand des Dachelementes (6) betrachtet, die am Dachelement befindliche Anlenkstelle (11) im Abstand von der Dachfläche unterhalb dieser liegt und so die
Innenseite (6b) des Dachelementes (6) auf höherem Niveau als die Anlenkstelle (11) liegt.

4. Fahrbare Vieh-Schlachteinrichtung nach einem der vorhergehenden Ansprüche, dadurch gekennzeichnet, daß die Bodenwand (5) mehrteilig, insbesondere zweiteilig, ausgebildet ist, wobei einer dieser Teile unmittelbar am Fahrzeug ausklappbar angebracht ist und der oder die andere(n) Teil(e) (5a) am ersterwähnten Teil ausziehbar angebracht ist bzw. sind.

5. Fahrbare Vieh-Schlachteinrichtung nach einem der vorhergehenden Ansprüche, dadurch gekennzeichnet, daß das Dachelement (6) mehrteilig, insbesondere zweiteilig, ausgebildet ist und hiebei einer der Teile am Fahrzeug ausklappbar angebracht ist und der oder die andere(n) Teil(e) (6a) an diesem Teil ausziehbar angebracht ist bzw. sind.

6. Fahrbare Vieh-Schlachteinrichtung nach einem der vorhergehenden Ansprüche, dadurch gekennzeichnet, daß das Dachelement (6) als Platte oder Wanne ausgebildet ist.

7. Fahrbare Vieh-Schlachteinrichtung nach einem der Ansprüche 1 bis 5, dadurch gekennzeichnet, daß das Dachelement (6) als Dachgestell (6d) mit rollbarer oder faltbarer Dachhaut (6g) ausgebildet ist.

8. Fahrbare Vieh-Schlachteinrichtung nach einem der Ansprüche 1 bis 3, dadurch gekennzeichnet, daß die Bodenwand (5) mehrteilig, insbesondere zweiteilig, ausgebildet ist, wobei einer dieser Teile unmittelbar am Fahrzeug ausklappbar angebracht ist und die Teile klappbar verbunden sind.

9. Fahrbare Vieh-Schlachteinrichtung nach einem der Ansprüche 1 bis 4 oder 8, dadurch gekennzeichnet, daß das Dachelement (6) mehrteilig, insbesondere zweiteilig, ausgebildet ist, wobei einer dieser Teile unmittelbar am Fahrzeug ausklappbar angebracht ist und die Teile klappbar verbunden sind.

10. Fahrbare Vieh-Schlachteinrichtung nach Anspruch 8 oder 9, dadurch gekennzeichnet, daß das Dachelement (6) als Platte oder Wanne ausgebildet ist.

11. Fahrbare Vieh-Schlachteinrichtung nach Anspruch 8 oder 9, dadurch gekennzeichnet, daß das Dachelement (6) als Dachgestell (6d) mit rollbarer oder faltbarer Dachhaut (6g) ausgebildet ist.

12. Fahrbare Vieh-Schlachteinrichtung nach einem der Ansprüche 1 bis 11, dadurch gekennzeichnet, daß die Anlenkstelle (10) der Bodenwand (5) und/oder die Anbringstelle (11) des Dachelementes (6) auf einer ein Auf- und Ab-Bewegen dieser Anlenkstelle bzw. dieser Anbringstelle ermöglichenden Hubeinrichtung (22) angeordnet sind.

13. Fahrbare Vieh-Schlachteinrichtung nach einem der vorhergehenden Ansprüche, dadurch gekennzeichnet, daß die Seitenwände (4) in Form rollbarer oder faltbarer Platten oder Planen ausgebildet sind, welche am Dachelement (6) nach unten ausziehbar angebracht und ausgezogen an der Bodenwand (5) fixierbar sind.

14. Fahrbare Vieh-Schlachteinrichtung nach einem der Ansprüche 1 bis 12, dadurch gekennzeichnet, daß die Seitenwände (4) in Form rollbarer oder faltbarer Platten oder Planen ausgebildet sind, welche an der Bodenwand (5) hochziehbar angebracht sind und am Dachelement (6) fixierbar sind.

15. Fahrbare Vieh-Schlachteinrichtung nach einem der Ansprüche 1 bis 12, dadurch gekennzeichnet, daß die Seitenwände (4) in Form rollbarer oder faltbarer Platten oder Planen ausgebildet sind, welche am Kastenaufbau nach hinten ausziehbar angebracht und ausgezogen an der Bodenwand und/oder am Dachelement fixierbar sind.

16. Fahrbare Vieh-Schlachteinrichtung nach einem der Ansprüche 11 bis 15, dadurch gekennzeichnet, daß die Seitenwände (4) aus Lamellen aufgebaut sind.

17. Fahrbare Vieh-Schlachteinrichtung nach einem der Ansprüche 1 bis 12, dadurch gekennzeichnet, daß die Seitenwände (4) aus Panelen oder Platten gebildet sind, welche klappbar an der Bodenwand (5) oder am Dachelement (6) angebracht sind.

18. Fahrbare Vieh-Schlachteinrichtung nach einem der Ansprüche 1 bis 12, dadurch gekennzeichnet, daß die Seitenwände (4) aus Panelen oder Platten gebildet sind, welche klappbar am Kastenaufbau (3) angebracht sind.

19. Fahrbare Vieh-Schlachteinrichtung nach den Ansprüchen 7 und 13, dadurch gekennzeichnet, daß die Dachhaut (6g) und die Seitenwände (4) integriert aus rollbaren oder faltbaren Platten oder Panelen ausgebildet sind.

20. Fahrbare Vieh-Schlachteinrichtung nach einem der Ansprüche 1 bis 6, dadurch gekennzeichnet, daß an je einer Seite des Fahrzeuges (2) verschiebbar angeordnete Seitenwände (4) in Fahrzeuglängsrichtung ausziehbar angeordnet sind.

21. Fahrbare Vieh-Schlachteinrichtung nach einem der vorhergehenden Ansprüche, dadurch gekennzeichnet, daß eine am Fahrzeug (2) ausziehbar oder ausklappbar gelagerte Kranschiene (15), welche über den Schlacht- und Arbeitsraum (14) verläuft, vorgesehen ist.

22. Fahrbare Vieh-Schlachteinrichtung nach einem der vorhergehenden Ansprüche, dadurch gekennzeichnet, daß die Kranschiene in an sich bekannter Weise Teil eines elektrisch oder hydraulisch antreibbaren Aufzugskrans ist.

23. Fahrbare Vieh-Schlachteinrichtung nach einem der vorhergehenden Ansprüche, dadurch gekennzeichnet, daß das Fahrzeug mit von außen zugänglichen gekühlten Behältern (19) für die Aufnahme von Innereien, Därmen, Häuten und Schlachtabfällen, mit einem Blutbehälter, mit einem Abwasserbehälter und vorzugsweise auch mit einem Warmhaltebehälter ausgestattet ist.

24. Fahrbare Vieh-Schlachteinrichtung nach einem der vorhergehenden Ansprüche, dadurch gekennzeichnet, daß die Einrichtung (1) mit einem andockbaren Arbeitsraum zur Vornahme ergänzender Arbeiten, wie z.B. Gedärmewaschen, versehen ist.

## Claims

1. A movable animal-slaughtering arrangement, in particular for slaughtering and working up cattle and pigs, which slaughtering arrangement is provided with a slaughtering and working chamber including auxiliary slaughtering and working up means, in particular a lifting device, and with a cooling device, characterised in that the slaughtering arrangement (1) is designed as a single motor vehicle (2), preferably an automotive vehicle, comprising a box-type assembly containing a cooling cell (3) and having an end at which a roofing element (6) is provided, which roofing element is movably arranged on the vehicle (2) to form a slaughtering and working chamber (14) following upon the box-type assembly and which has an inner height exceeding that of the box-type assembly, the roofing element being fixable in a position cantilevering from the cooling cell (3) when the animal slaughtering arrangement is in its operative state, in which its inner side extends at a level above the ceiling level of the cooling cell (3), and at which end there is also arranged a bottom wall (5) hinged to the bottom of the vehicle, capable of being flipped out, and designed in the manner of a tub having a central base zone (5b) and rim walls (5c) projecting upwardly therefrom, the central base zone (5b) of the bottom wall (5), in the flipped-out position for the operative state, lying on a level extending below the bottom level of the box-type assembly, and at which end, furthermore, movable side wall elements (4) are arranged capable of being placed between the roofing element (6) and the bottom wall (5) to laterally close the slaughtering and working chamber (14).

2. A movable animal slaughtering arrangement according to claim 1, characterised in that the bottom wall (5) is hinged to the vehicle (2) at a rim (5d) of a rim wall which is located at a distance from the base zone (5b), and thus, in the flipped-out state of the bottom wall (5), the base zone (5b) thereof is located below the hinging site (10) of the bottom wall by the height of the respective rim wall (5c).

3. A movable animal slaughtering arrangement according to claim 1 or 2, characterised in that the roofing element (6) is hinged to the top of the vehicle so as to be capable of being flipped out, wherein, viewed in the flipped-out state of the roofing element (6), the hinging site (11) present on the roofing element is located at a distance from the roof surface below the same, whereby the inner side (6b) of the roofing element (6) is located at a higher level than the hinging site (11).

4. A movable animal slaughtering arrangement according to any one of the preceding claims, characterised in that the bottom wall (5) is designed to have several parts, in particular two parts, one of these parts being directly attached to the vehicle so as to be capable of being flipped out, and the other part(s) (5a) being attached to the former part so as to be capable of telescoping.

5. A movable animal slaughtering arrangement according to any one of the preceding claims, characterised in that the roofing element (6) is designed to have several parts, in particular two parts, one of these parts being attached to the vehicle so as to be capable of being flipped out, and the other part(s) (6a) being attached to this first part so as to be capable of telescoping.

6. A movable animal slaughtering arrangement according to any one of the preceding claims, characterised in that the roofing element (6) is designed as a plate or tub.

7. A movable animal slaughtering arrangement according to any one of claims 1 to 5, characterised in that the roofing element (6) is designed as a roof structure (6d) having a coilable or foldable roof skin (6g).

8. A movable animal slaughtering arrangement according to any one of claims 1 to 3, characterised in that the bottom wall (5) is designed in several parts, in particular in two parts, wherein one of these parts is attached directly to the vehicle so as to be capable of being flipped out, and the parts are flappably interconnected.

9. A movable animal slaughtering arrangement according to any one of claims 1 to 4 or 8, characterised in that the roofing element (6) is designed in several parts, in particular in two parts, wherein one of these parts is attached directly to the vehicle so as to be capable of being flipped out, and the parts are flappably interconnected.

10. A movable animal slaughtering arrangement according to claim 8 or 9, characterised in that the roofing element (6) is designed as a plate or tub.

11. A movable animal slaughtering arrangement according to claim 8 or 9, characterised in that the roofing element (6) is designed as a roof structure (6d) having a coilable or foldable roof skin (6g).

12. A movable animal slaughtering arrangement according to any one of claims 1 to 11, characterised in that the hinging site (10) of the bottom wall (5) and/or the site of attachment (11) of the roofing element (6) are arranged on a lifting means (22) enabling an upward and downward movement of this hinging site and/or site of attachement.

13. A movable animal slaughtering arrangement according to any one of the preceding claims, characterised in that the side walls (4) are designed in the form of coilable or foldable plates or canvas attached on the roofing element (6) so as to be capable to be downwardly telescoped and fixable to the bottom wall (5) in the telescoped state.

14. A movable animal slaughtering arrangement according to any one of claims 1 to 12, characterised in that the side walls (4) are designed in the form of coilable or foldable plates or canvas attached to the bottom wall (5) so as to be capable of being pulled upwardly and fixable to the roofing element (6).

15. A movable animal slaughtering arrangement according to any one of claims 1 to 12, characterised in that the side walls (4) are designed in the form of coilable or foldable plates or canvas attached to the box-type assembly to be capable of being rearwardly telescoped and, when telescoped, fixable to the bottom wall and/or to the roofing element.

16. A movable animal slaughtering arrangement according to any one of claims 11 to 15, characterised in that the side walls (4) are assembled of lamellae.

17. A movable animal slaughtering arrangement according to any one of claims 1 to 12, characterised in that the side walls (4) are formed by panels or plates flappably attached to the bottom wall (5) or to the roofing element (6).

18. A movable animal slaughtering arrangement according to any one of claims 1 to 12, characterised in that the side walls (4) are formed by panels or plates flappably attached to the box-type assembly (3).

19. A movable animal slaughtering arrangement according to claims 7 and 13, characterised in that the roof skin (6g) and the side walls (4) are integrally designed of coilable or foldable plates or panels.

20. A movable animal slaughtering arrangement according to any one of claims 1 to 6, characterised in that to one side each of the vehicle (2) displaceably arranged side walls (4) are arranged so as to be capable of being telescoped in the longitudinal direction of the vehicle.

21. A movable animal slaughtering arrangement according to any one of the preceding claims, characterised in that a crane rail (15) is provided, which is mounted on the vehicle (2) so as to be capable of being telescoped or flipped out and extends over the slaughtering and working chamber (14).

22. A movable animal slaughtering arrangement according to any one of the preceding claims, characterised in that the crane rail, in a manner known per se, is part of an electrically or hydraulically drivable lifting crane.

23. A movable animal slaughtering arrangement according to any one of the preceding claims, characterised in that the device is provided with externally accessible cooled containers (19) for accommodating innards, intestines, skins and slaughter waste materials, with a blood container, with a waste water container and preferably also with a container for keeping materials warm.

24. A movable animal slaughtering arrangement according to any one of the preceding claims, characterised in that the arrangement (1) is provided with a work chamber capable of being docked to carry out complementary work, such as washing the intestines.

## Revendications

1. Abattoir mobile en particulier pour l'abattage et le traitement de bovins et de porcs, qui est pourvu d'une chambre d'abattage et d'une chambre de travail comportant des moyens auxiliaires d'abattage et de traitement, en particulier un dispositif de levage, et un dispositif de réfrigération, caractérisé en ce que l'abattoir (1) est réalisé sous la forme d'un seul véhicule (2) équipé de préférence d'un entraînement propre et comprenant un fourgon contenant une cellule réfrigérante (3), sur l'une des extrémités duquel, pour former une chambre d'abattage et de travail (14) se raccordant au fourgon et présentant une hauteur intérieure supérieure au fourgon, sont agencés un élément de toiture (6) monté mobile sur le véhicule (2), qui à l'état opérationnel de l'abattoir, est susceptible d'être fixé dans une position en porte à faux en éloignement de la cellule de réfrigération (3), position dans laquelle sa face intérieure se trouve à un niveau s'étendant au-dessus du niveau du plafond de la cellule de réfrigération (3), et une paroi de fond (5) articulée dans la partie inférieure du véhicule de manière à pouvoir être basculée, qui est réalisée sous la forme d'une cuve avec une zone de base (5b) médiane et avec des parois de bord (5c) faisant saillie depuis celle-ci vers le haut, cette paroi de fond (5) se trouvant, dans la position basculée pour l'état opérationnel, avec sa zone de base (5b) à un niveau s'étendant au-dessous du niveau de sol du fourgon, et sont agencés d'autres éléments de parois latéraux (4) mobiles qui sont susceptibles d'être placés entre l'élément de toiture (6) et la paroi de fond (5) pour fermer latéralement la chambre d'abattage et de travail (14).

2. Abattoir mobile selon la revendication 1, caractérisé en ce que la paroi de fond (5) est articulée sur le véhicule, sur le bord (5b) d'une paroi de bord, qui est éloigné de la zone de base (5b) et ainsi, à l'état basculé de la paroi de fond (5), sa zone de base (5b) est située à une distance en dessous du point d'articulation (10), qui correspond à la hauteur de la paroi de bord (5c) correspondante.

3. Abattoir mobile selon l'une ou l'autre des revendications 1 et 2, caractérisé en ce que l'élément de toiture (6) est agencé sur le haut du véhicule de manière à pouvoir basculer, et vu à l'état basculé de l'élément de toiture (6), le point d'articulation (11) se trouvant sur l'élément de toiture (6) est situé à distance de la surface du toit en dessous de celle-ci et ainsi, la face intérieure (6b) de l'élément de toiture (6) est située à un niveau plus élevé que le point d'articulation (11).

4. Abattoir mobile selon l'une quelconque des revendications précédentes, caractérisé en ce que la paroi de fond (5) est réalisée en plusieurs parties, en particulier en deux parties, une de ces parties étant ménagée directement sur le véhicule de manière à pouvoir basculer et l'astre ou les autres parties (5a) étant ménagées sur la première partie de manière télescopique.

5. Abattoir mobile selon l'une quelconque des revendications précédentes, caractérisé en ce que l'élément de toiture (6) est réalisé en plusieurs parties, en particulier en deux parties, une des parties étant ménagée sur le véhicule de manière à pouvoir basculer et l'autre ou les autres parties (6a) étant ménagées sur cette partie de manière télescopique.

6. Abattoir mobile selon l'une quelconque des revendications précédentes, caractérisé en ce que l'élément de toiture (6) est réalisé sous forme de plaque ou de cuve.

7. Abattoir mobile selon l'une quelconque des revendications 1 à 5, caractérisé en ce que l'élément de toiture (6) est réalisé sous forme d'ossature de toiture (6d) avec couverture (6g) de toiture enroulable ou repliable.

8. Abattoir mobile selon l'une quelconque des revendications 1 à 3, caractérisé en ce que la paroi de fond (5) est réalisée en plusieurs parties, en particulier en deux parties, une de ces parties étant ménagée directement sur le véhicule de manière à pouvoir basculer et les parties étant reliées en rabattement.

9. Abattoir mobile selon l'une quelconque des revendications 1 à 4 ou 8, caractérisé en ce que l'élément de toiture (6) est réalisé en plusieurs parties, en particulier en deux parties, une des parties étant ménagée directement sur le véhicule de manière à pouvoir basculer et les parties étant reliées en rabattement.

10. Abattoir mobile selon l'une ou l'autre des revendications 8 et 9, caractérisé en ce que l'élément de toiture (6) est réalisé sous forme de plaque ou de cuve.

11. Abattoir mobile selon l'une ou l'autre des revendications 8 et 9, caractérisé en ce que l'élément de toiture (6) est réalisé sous forme d'ossature de toiture (6d) avec couverture (6g) de toiture enroulable ou repliable.

12. Abattoir mobile selon l'une quelconque des revendications 1 à 11, caractérisé en ce que le point d'articulation (10) de la paroi de fond (5) et/ou le point de montage (11) de l'élément de toiture (6) sont agencés sur un dispositif de levage (22) permettant une montée et une descente de ce point d'articulation ou de ce point de montage.

13. Abattoir mobile selon l'une quelconque des revendications précédentes, caractérisé en ce que les parois latérales (4) sont réalisées sous forme de plaques ou de bâches enroulables ou repliables qui sont montées sur l'élément de toiture (6) de manière à pouvoir être étirées vers le bas et qui sont susceptibles d'être fixées sur la paroi de fond (5) à l'état d'extension.

14. Abattoir mobile selon l'une quelconque des revendications 1 à 11, caractérisé en ce que les parois latérales (4) sont réalisées sous forme de plaques ou de bâches enroulables ou repliables qui sont montées sur la paroi de fond (5) de manière à pouvoir être étirées vers le haut et qui sont susceptibles d'être fixées sur l'élément de toiture (6).

15. Abattoir mobile selon l'une quelconque des revendications 1 à 12, caractérisé en ce que les parois latérales (4) sont réalisées sous forme de plaques ou de bâches enroulables ou repliables qui sont montées sur le fourgon de manière à pouvoir être étirées vers l'arrière et qui sont susceptibles d'être fixées sur la paroi de fond et/ou sur l'élément de toiture à l'état d'extension.

16. Abattoir mobile selon l'une quelconque des revendications 1 à 15, caractérisé en ce que les parois latérales (4) sont constituées de lamelles.

17. Abattoir mobile selon l'une quelconque des revendications 1 à 12, caractérisé en ce que les parois latérales (4) sont formées par des panneaux ou des plaques qui sont montées en rabattement sur la paroi du fond (5) ou sur l'élément de toiture (6).

18. Abattoir mobile selon l'une quelconque des revendications 1 à 12, caractérisé en ce que les parois latérales (4) sont formées par des panneaux ou des plaques qui sont montés en rabattement sur le fourgon.

19. Abattoir mobile selon l'une quelconque des revendications 7 à 13, caractérisé en ce que la couverture de toiture (6g) et les parois latérales (4) sont réalisées de manière intégrée en plaques ou panneaux enroulables ou repliables.

20. Abattoir mobile selon l'une quelconque des revendications 1 à 6, caractérisé en ce que des parois latérales (4) déplaçables sont montées sur chacun des côtés du véhicule (2), de manière à pouvoir être étirées en direction longitudinale du véhicule.

21. Abattoir mobile selon l'une des revendications précédentes, caractérisé en ce qu'il est prévu un rail de grue (15) monté de manière à pouvoir être étiré ou pivoté vers l'extérieur, qui s'étend au-dessus de la chambre d'abattage et de travail (14).

22. Abattoir mobile selon l'une des revendications précédentes, caractérisé en ce que le rail de grue fait partie de manière connue d'une grue élévatrice à entraînement électrique ou hydraulique.

23. Abattoir mobile selon l'une des revendications précédentes, caractérisé en ce que le véhicule est équipé de récipients (19) réfrigérés accessibles de l'extérieur destinés à recevoir les abats, les boyaux, les peaux et les déchets d'abattage, comportant un récipient pour le sang, un récipient pour les eaux usées et de préférence aussi un récipient chauffant.

24. Abattoir mobile selon l'une des revendications précédentes, caractérisé en ce que l'installation est pourvue d'une chambre de travail susceptible d'être accostée, pour procéder à des travaux complémentaires tels que par exemple le lavage des boyaux.
